# EUROPEAN PATENT SPECIFICATION

(11) **EP 3 313 901 B1**
(45) Date of publication and mention of the grant of the patent: **10.04.2019**
(21) Application number: 16727395.2
(22) Date of filing: 27.05.2016
(51) Int. Cl.: C08F 110/02, C08F 210/16, C08F 4/69

(54) **POLYMERISATION OF ETHYLENE IN THE PRESENCE OF A SILYLCHROMATE BASED CATALYST**
POLYMERISIERUNG VON ETHYLEN BEI VORHANDENSEIN EINES SILYLCHROMATBASIERTEN KATALYSATORS
POLYMERISATION DE L'ETHYLENE EN PRESENCE D'UN CATALYSEUR A BASE DE SILYLCHROMATE

(30) Priority: 23.06.2015 EP 15173272; 05.11.2015 US 201562251287 P
(43) Date of publication of application: 02.05.2018
(73) Proprietor: SABIC Global Technologies B.V., 4612 PX Bergen op Zoom (NL)
(72) Inventor: ALIYEV, Vugar, Riyadh 11422 (SA)
(74) Representative: Sabic Intellectual Property Group
(86) International application number: PCT/EP2016/061995
(87) International publication number: WO 2016/206911

(56) References cited:
- GB-A- 1 332 510
- JP-B2- 3 396 911
- JP-B2- 3 841 361
- JP-B2- 3 847 809
- US-A1- 2014 171 605

## Description

The invention is directed to a process for the production of high density polyethylene by polymerisation of ethylene in the presence of a silylchromate based catalyst and reducing agent.

The production processes of LDPE, HDPE and LLDPE are summarised in "Handbook of Polyethylene" by Andrew Peacock (2000; Dekker; ISBN 0824795466) at pages 43-66. The catalysts can be divided in three different subclasses including Ziegler Natta catalysts, Phillips catalysts and single site catalysts. The various processes may be divided into solution polymerisation processes employing homogeneous (soluble) catalysts and processes employing supported (heterogeneous) catalysts. The latter processes include both slurry and gas phase processes.

The polymerisation of ethylene with supported chromium based catalysts is disclosed by Kevin Cann in "Comparison of silyl chromate and chromium oxide based olefin polymerisation catalysts" (Macromolecular Symp, 2004, 213, 29-36).This publication elucidates that there is a clear difference between chromium oxide based catalysts (Philips catalysts) and silylchromate based catalysts. The silylchromate catalyst consists of silylchromate (bis-triphenylsilyl chromate) absorbed on dehydrated silica and subsequently reduced with for example diethylaluminum ethoxide.The use of silyl chromate as a polymerization catalyst for olefin polymerization is disclosed in for example US 3,324,095, US 3,324,101 and US. 3,642,749. Although similar in structure the oxo and triphenylsilyl chromate catalyst perform very differently in polymerisation reactions. Silylchromate-based catalysts generally produce desirable polyethylenes relative to those produced by chromium oxide-type catalysts. Silylchromate produced polyethylenes generally have a broader molecular weight distribution than those produced using chromium oxide-type catalysts. The broader molecular weight distribution leads to better processability of the resulting polyethylene whereas the productivity of polymerisations (gPE/g catalyst) with silylchromate-based catalysts is relatively low in comparison with chromium oxide-based catalysts.

Various attempts have been made to increase the productivity of the catalyst.

US 3,704,287 discloses an improved catalyst useful for preparing high density olefin polymers in improved yields, and in some cases, with reduced swell properties, is prepared by depositing a chromate ester catalyst on activated silica and then treating the resulting composition with selected organo-metallic reducing agents at elevated temperatures. The organometallic reducing agents which are used with the supported chromate ester catalysts have the structure M(R₁')ₐ(R₂")_{b} wherein M is a metal selected from group consisting of aluminum, gallium and magnesium. R₁' is a saturated or unsaturated hydrocarbon group containing from 1 to 20 carbon atoms; R₂" is R₁' or H. Based on the patent, the improvements in polymer yields of the order of 2 to over 10 times may be obtained by using the reducing agents of the present invention at elevated reducing temperatures without deleteriously effecting the physical properties of the resulting polymers.

US 6,673,736 B2 discloses an improved chromate catalyst using a highly porous silica support having high surface area and total pore volume. According to the invention, it has been found that the highly porous silica support allows effective loading of the chromate promoter at higher levels than conventional supports which resulted an increase total catalyst productivity that is equal to about twice that seen using conventional silyl chromate catalysts.

US 3,642,749 discloses ethylene polymers of broad molecular weight distribution are obtained from a catalyst system comprising a supported hindered di-tertiary polyalicyclic chromate ester treated with an organometallic reducing agent such as diethylaluminum ethoxide (DEALE) was used which shows that the produced polymers have a significantly higher intrinsic viscosity and therefore a broader molecular weight distribution.

Ray Hoff et al (Handbook of Transition Metal Polymerization Catalysts, John Wiley & Sons, 2010, pp. 447) disclose that dialkyl aluminum alkoxides are preferred reducing agents. While both the trialkyl and dialkyl-ethoxy aluminum compounds increase the productivity of the catalyst, dialkyl aluminum alkoxides lower the molecular weight of the polyethylene polymers made with silyl chromate catalysts. The trialkyl aluminum reducing agents increase the polymer molecular weight. Reduction with DEALE produces a catalyst that makes polymers, in both slurry and gas-phase processes, that have molecular weights that are useful for many high-density polyethylene (HDPE) applications.

WO2010115613 discloses a process wherein high density ethylene polymer with a density between 945 and 965 kg/m³ is obtained by polymerizing ethylene in the presence of a supported chromium oxide based catalyst and an activator comprising a reaction mixture of a boron compound and/or an alkyl aluminum compound and a nitrogen containing compound. The combination of the supported chromium oxide based catalyst and the specific activator comprising the reaction product of the boron compound and/or the alkyl aluminum compound and a nitrogen containing compound results in a broader MWD of the polyethylene. Furthermore, the combination of the chromium catalyst and the activator results in a high productivity of the high density ethylene polymerisation process. WO2010115613 elucidates the clear difference between a chromium oxide based catalyst being obtained by calcining a chromium compound carried on an inorganic oxide carrier in a non-reducing atmosphere and a silyl chromate catalyst which consists of silylchromate (bis-triphenylsilyl chromate) absorbed on dehydrated silica and subsequently reduced with for example diethylaluminum ethoxide. Although similar in structure the oxo and triphenylsilyl chromate catalyst perform very differently in polymerisation reactions. The catalyst and the reaction mixture of aluminium compound and amine activator are injected separately to the reactor.

US 3324095 discloses the polymerization of ethylene in the presence of a silylchromate catalyst and a small amount of an organo aluminum compound having one or two oxy hydrocarbyl groups attached to the aluminum atom. US 3324095 does not use a nitrogen-containing compound. The amount of chromium in the final catalyst ranges between 0.16 % by weight and 0.2 % by weight.

The amount of silylchromate deposited on the final catalyst has a major effect on catalyst activity. The activity of the catalyst generally increases with an increase in the chromium loading. However this adversely affects the molecular weight of the produced resin, such as a higher chromium loading in the catalyst is significantly increase the FI (Flow Index) of the produced HDPE resin. Reduction in the molecular weight of the resin is not desirable for the blow molded articles such as large size blow molded articles for example closed-head shipping containers, fuel tanks and containers for industrial use and high molecular weight film applications.

In order to compensate the decrease in the molecular weight of the produced polymer resin, the reactor temperature must be reduced below the operating regions (98-102°C) which eventually results in significant reduction or lose the catalyst activity. Therefore, the optimum chromium loading for the conventional silylchromate based catalyst (for a given limited silica support surface area) which gives relatively good catalyst productivity and maintaining good bed temperature ranges (98-102°C) is between about 0.25-0.29 wt% only. Since an increase in the molecular weight normally improves the physical properties of polyethylene resins, there is a strong demand for polyethylene having relatively high molecular weight. However, the polyethylene with high molecular weight is more difficult to process. The broader molecular weight distribution leads to better processability of the resulting polyethylene resin.

It is the object of the present invention to develop a highly active silylchromate based catalyst for the polymerization or co-polymerisation of olefin, preferably ethylene, with similar or improved resin properties for example higher molecular weight and broader molecular weight distribution compared to the conventional silylchromate based catalyst. The catalyst must also result in a high productivity of the ethylene polymerization with similar or improved resin properties.

The invention relates to a process for the production of high density polyethylene having a density in the range between 945 and 965 kg/m³ by polymerisation of ethylene in the presence of a supported silylchromate based catalyst and a reducing agent comprising the reaction mixture of an alkyl aluminum compound and a nitrogen containing compound characterized in that the alkyl aluminum compound is an organo aluminum compound having the formula AlR₃, in which R is a hydrocarbon radical containing 1-10 carbon atom and the nitrogen containing compound is a cycloalkylamine having the general formula R-NH₂, wherein R is cycloalkyl radical having from 3 to 8 carbon atoms.

The process according to the invention results in an improvement of the productivity of supported silylchromate catalysts for the polymerization of ethylene and in a higher activity of the ethylene polymerization process .

The combination of the silylchromate based catalyst and the specific reducing agent comprising the reaction product of the alkyl aluminum compound and nitrogen containing compound results in a higher molecular weight and broader molecular weight distribution of the polyethylene.

Another advantage is that the catalyst is more stable towards poisons, such as oxygen and moisture.

A very important advantage of the use of the composition comprising a silylchromate based catalyst and the specific reducing agent in the process according to the invention is the possibility to increase the catalyst productivity by increasing the chromium loading up to for example 1 % by weight without having a negative effect on the properties of the polymer. In contrast, in a process without the use of said composition the increase of the chromium loading up to for example 1 % by weight has a negative effect on properties of the polymer.

A further advantage is the improved 1-hexene comonomer incorporation compared to the conventional silylchromate based catalyst.

According to the present invention is prepared by the reaction of the reducing agent with the porous support and then by a reaction with the silylchromate.

Preferably, the silylchromate present in the catalyst is bis(triphenylsilyl) chromate.

The catalyst components or their reaction products are anchored to the support surface.

Preferably, the support is silica.

The silica may have a surface area (SA) larger than 150 m²/g and pore volume (PV) larger than 0.8 cm3/g. The support may be modified so as to include cogels such as for example silica-titania or silica-alumina and by the replacement of silica by alumina or amorphous aluminium phosphates. The silica support may also be doped with chemical compounds containing for example aluminum, titanium, phosphorus, boron or fluor.

Preferably, water and other volatile compounds are removed from the support before interaction with the catalytic components by heat activation of the support in a stream of an inert gas. An example of a suitable inert gas is nitrogen.

Preferably the silica support has a pore volume larger than 0.8 cm³/g and a specific surface area of at least 150 m²/g.

The amount of chromium in the catalyst is generally at least 0.3 % by weight.

Preferred examples of the organo aluminum compound of the formula AIR3 include trimethyl aluminum, triethyl aluminum, triisobutyl aluminum, tri-n-hexyl aluminum and/or tri octyl aluminum.

More preferably the organo aluminum compound of the formula AIR3 is selected from trimethyl aluminum, triethyl aluminum and/or triisobutyl aluminum.

According to a further preferred embodiment of the invention the nitrogen containing compound is selected from cyclopropylamine, cyclobutylamine, cyclopentylamine, cyclohexylamine, cycloheptylamine and/or cyclooctylamine.

More preferably the nitrogen containing compound is cyclohexylamine and/or cyclooctylamine.

The process according to the present invention does not comprise pyrrole-containing compounds such as for example hydrogen pyrrolide or pyrole, derivative of hydrogen pyrrolide and metal pyrrolide complexes because these compounds are unsuitable to be applied as the nitrogen containing compound.

Generally, the molar ratio of aluminium to nitrogen ranges between 0.1:1 and 4:1.

Preferably, the molar ratio of aluminium to nitrogen ranges between 1:1 and 3:1.

Generally, the molar ratio of aluminium to chromium ranges between 0.1:1 and 25:1.

Preferably, the molar ratio of aluminium to chromium ranges between 0.1:1 and 15:1.

Generally, the amount of chromium (weight percent wt%) in the final catalyst ranges between 0.2:1 and 5:1, more preferably ranges between 0.3:1 and 2:1.

The amount of chromium in the final catalyst is generally more than 0.2 % by weight and less than 2 % by weight.

Preferably, the amount of chromium in the final catalyst ranges between 0.3 % by weight and 1 % by weight.

More preferably, the amount of chromium in the final catalyst is at least 0.4 % by weight.

The polymerisation may be performed via a gas phase process or via a slurry process.

The polyethylene obtained with the process according to the invention is suited to be applied in the production of large size blow molded articles.

Preferred blow-molded articles are IBC, drums and fuel tanks.

Furthermore, the products according to the invention may be applied in high molecular weight film applications.

US20140171605 discloses a process for the production of high density polyethylene by polymerisation of ethylene in the presence of a silylchromate based catalyst and a reducing agent comprising the reaction mixture of an alkyl aluminium compound and a nitrogen containing compound selected from decylamine, undecylamine, octylamine, octadecylamine, dodecylamine, N-methyloctadecylamine, N-ethyl-dodecylamine, hexadecylamine and N-N" dimethyl-n-octadecylamine. Preferably octadecylamine is applied. US20140171605 does not disclose cycloalkylamines.

The invention will be elucidated by means of the following non-limiting examples.

### Examples

MFR (Melt Flow Rate) measures the viscosity of the thermoplastic polymers in its molten state. The value of melt flow rate is expressed as the mass of polymer melt pushed from the heated cylinder of the extrusion plastometer through its precision bore orifice by its piston in a period, the standard units of the value being grams per ten minutes (g/10 min). The method is described in the similar standards ASTM D1238 and ISO 1133. Melt Flow Rate is an indirect measure of molecular weight, with high flow rate corresponding to low molecular weight. Different weights may be used on the plunger for different polymer types or for different molecular weight ranges within products of a given type. For example, blow molding grades of HDPE might report a melt index value using a 21.6 kg weight, due to the high viscosity of such grades.

Polymer molecular weight and its distribution (MWD) were determined by Polymer Labs 220 gel permeation chromatograph. The chromatograms were run at 150°C using 1,2,4-trichlorobenzene as the solvent with a flow rate of 0.9 ml/min. The refractive index detector is used to collect the signal for molecular weights. The software used is Cirrus from PolyLab for molecular weights from GPC. The calibration of the HT-GPC uses a Hamielec type calibration with broad standard and fresh calibration with each sample set.

FI is measured according to ASTM D1238.

Mz and Mz+1 are measured according to ASTM-D-6474.

The density of the polyethylene was measured according to ASTM-D-792 test method.

### Experiment I

### Catalyst preparation

10 grams of silica (Grace 955) dehydrated in a flow of dry nitrogen at 600°C for 4 hours, was slurried with 50 ml of dried isopentane under nitrogen in a 250 ml round-bottom flask using a magnetic stirrer. A certain amount (as per the wt% of chromium described in Table 1) of bis-triphenylsilyl chromate was added and the mixture was stirred for 2 hours at 50°C. The colour of the silica was turned to orange. After the deposition of the bis-triphenylsilylchromate on the activated silica support was completed, as evidenced by the disappearance of colour in the solvent, the reducing agent was added via syringe. The molar ratio of aluminum to chromium was kept constant in all experiments described in Table 1 & 2 (Al/Cr = 3 m.r.). The colour of the slurry was turned to green immediately. After the addition of the reducing agent, the catalyst was further agitated at room temperature for 10 min. Finally, the catalyst samples were dried at 50°C under the nitrogen atmosphere to get the free-flowing catalysts.

For comparison according to Comparative Examples A and B, silylchromate catalysts with 0.57 wt% chromium loading were prepared using DEALOX and TIBAL as a reducing agents. The results are described in Table 1 and 2.

### Experiment II

### Preparation of the reducing agent comprising the reaction mixture of an alkyl aluminium compound and a nitrogen-containing compound

Under a dry nitrogen atmosphere, a glass vial was charged with a hexane solution of triisobutyl aluminium (TIBAL) and then cyclohexylamine (CHA) was added in a molar ratio of TIBAL: CHA = 2.8 :1 and the mixture was stirred at ambient temperature for 5 min.

### Experiment III

### Catalyst preparation

10 grams of silica (Grace 955) dehydrated in a flow of nitrogen at 600°C for 4 hours, was slurried with 50 ml of dried isopentane at room temperature under nitrogen in a 250 ml round-bottom flask using a magnetic stirrer. A certain amount of a mixture of TIBAL and cyclohexylamine (according to the Experiment II) was added dropwise with constant stirring to the silica slurry. Stirring was continued for 1 hour at room temperature. Then TIBAL + cyclohexylamine treated silica was dried at 50°C under the nitrogen atmosphere to get the free-flowing powder. Then a certain amount of bis triphenylsilyl chromate was added to the TIBAL + cyclohexylamine treated silica and slurried with 50 ml of dried isopentane at room temperature under nitrogen in a 250 ml round-bottom flask using a magnetic stirrer. Stirring was continued for 2 hours at room temperature. The colour of the silica was turned to off-white. Finally, the catalyst samples were dried at 50°C under the nitrogen atmosphere to get the free-flowing catalysts. The results are described in Table 3 and 4.

### Reference Examples I-IV, Examples V-IX and Comparative Example A

### Ethylene Polymerization

The polymerisation reaction was carried out in a two liters stirred autoclave reactor in deoxygenated isopentane in the absence of a scavenger. The polymerisation reaction in the presence of the catalyst according to Experiment I and Experiment III was conducted at 100°C and 20 bars (290 psi) of total pressure. Ethylene polymerisation was carried out for 1 hour, with ethylene supplied on demand to maintain the total reactor pressure at 20 bar. Upon completion of the polymerisation, the reactor was vented and cooled to ambient temperature to recover the polymer.

**Table 1**

| Example | Cr (wt%) | TIBAL+ CHA /Cr molar ratio | Productivity gPE/gcat.hr | Bulk density (g/cc) | FI (21.6 kg) | Density (kg/m³) |
|---|---|---|---|---|---|---|
| I | 0.40 | 3 | 348 | 0.44 | 9.43 | 959.3 |
| II | 0.49 | 3 | 434 | 0.44 | 7.52 | 958.1 |
| III | 0.57 | 3 | 400 | 0.42 | 5.96 | 955.2 |
| IV | 0.65 | 3 | 380 | 0.39 | 6.91 | |

| Comparative Example | Cr (wt%) | DEALOX/Cr molar ratio | | | | |
|---|---|---|---|---|---|---|
| A | 0.57 | 3 | 64 | 0.29 | 43.19 | n.m. |

| Comparative Example | Cr (wt%) | TIBAL/Cr molar ratio | | | | |
|---|---|---|---|---|---|---|
| B | 0.57 | 3 | 194 | 0.35 | nd | 961.1 |

**Table 2**

| Example | Cr (wt%) | TIBAL+ CHA/Cr molar ratio | Mw | Mn | MWD | Mz | Mz+1 |
|---|---|---|---|---|---|---|---|
| I | 0.40 | 3 | 272321 | 12743 | 21.3 | 2520377 | 4585344 |
| II | 0.49 | 3 | 294676 | 10172 | 28.9 | 2588639 | 4847999 |
| III | 0.57 | 3 | 354504 | 11484 | 30.8 | 3000869 | 5421818 |
| IV | 0.65 | 3 | 364305 | 9876 | 36.8 | 2875582 | 5318706 |

| Comparative Example | Cr (wt%) | DEALOX/Cr molar ratio | | | | | |
|---|---|---|---|---|---|---|---|
| A | 0.57 | 3 | 169823 | 9163 | 18.5 | 1748988 | 4184006 |

**Table 3**

| Example | Cr (wt%) | TIBAL+ CHA/Cr molar ratio | Prod. gPE/gcat.hr | BD (g/cc) | FI (21.6 kg) |
|---|---|---|---|---|---|
| V | 0.49 | 3 | 98 | 0.35 | 4.16 |
| VI | 0.49 | 4.5 | 164 | 0.36 | 6.87 |
| VII | 0.49 | 6 | 188 | 0.37 | 6.0 |
| VIII | 0.49 | 8 | 260 | 0.42 | 3.82 |
| IX | 0.49 | 10 | 142 | 0.37 | 1.41 |

**Table 4**

| Example | Cr (wt%) | TIBAL+ CHA /Cr molar ratio | Mw | Mn | MWD | Mz | Mz+1 |
|---|---|---|---|---|---|---|---|
| V | 0.49 | 3 | 372323 | 12724 | 29.2 | 3021638 | 5451715 |
| VI | 0.49 | 4.5 | 321497 | 10551 | 30.5 | 2778721 | 5073363 |
| VII | 0.49 | 6 | 310621 | 11453 | 27.1 | 2646916 | 5182592 |
| VIII | 0.49 | 8 | 402581 | 12329 | 32.6 | 3129810 | 5482887 |
| IX | 0.49 | 10 | 534982 | 14779 | 36.2 | 3311733 | 5675865 |

Table 1 shows the results of Reference Examples I-IV as well as of Comparative Example A-B (comparative) using of higher chromium loading on the catalyst productivity as well as the polymer flow index. Reference Example III was compared with the Comparative Examples A-B where in all three examples the chromium loading is 0.57 wt%.

Table 2 shows the properties of the polymers prepared according to the Reference Examples I-IV as well as Comparative Example A.

Table 3 shows the results of Examples V-IX using TIBAL+ cyclohexylamine treated silica supported silylchromate based catalyst on the productivity as well as the polymer flow index. The third column show the ratio of Al/Cr.

Table 4 shows the properties of the polymers prepared according to the Examples V-IX.

## Claims

1. A process for the production of high density polyethylene having a density in the range between 945 and 965 kg/m³ by polymerisation of ethylene in the presence of a supported silylchromate based catalyst and a reducing agent comprising the reaction mixture of an alkyl aluminum compound and a nitrogen containing compound **characterized in that** the alkyl aluminum compound is an organo aluminum compound having the formula AlR₃, in which R is a hydrocarbon radical containing 1-10 carbon atom and the nitrogen containing compound is a cycloalkylamine having the general formula R-NH₂, wherein R is cycloalkyl radical having from 3 to 8 carbon atoms,
wherein the catalyst system is prepared by the reaction of the reducing agent with a porous support and then by a reaction with a silylchromate.

2. A process according to claim 1 **characterised in that** the porous support is silica.

3. A process according to any one of claims 1-2 **characterised in that** silylchromate is bis(triphenylsilyl) chromate.

4. A process according to any one of claims 1-3 **characterised in that** the organo aluminum compound having the formula AIR3 is trimethyl aluminum, triethyl aluminum and/or triisobutyl aluminum.

5. A process according to claim 4 **characterised in that** the organo aluminum compound having the formula AIR3 is triisobutyl aluminum.

6. A process according to any one of claims 1-5 **characterised in that** the nitrogen containing compounds is selected from cyclopropylamine, cyclobutylamine, cyclopentylamine, cyclohexylamine, cycloheptylamine and/or cyclooctylamine.

7. A process according to claim 6 **characterised in that** the nitrogen containing compound is cyclohexylamine and/or cyclooctylamine.

8. An article prepared using the products obtained with the process according to any one of claims 1-7.

9. A blow molded article prepared using the products obtained with the process according to any one of claims 1-7.

## Patentansprüche

1. Verfahren zur Herstellung von Polyethylen hoher Dichte mit einer Dichte im Bereich zwischen 945 und 965 kg/m³ durch Polymerisation von Ethylen in Gegenwart eines geträgerten Katalysators auf Silylchromat-Basis und eines Reduktionsmittels, das die Reaktionsmischung einer Alkylaluminiumverbindung oder einer stickstoffhaltigen Verbindung umfasst, **dadurch gekennzeichnet, dass** es sich bei der Alkylaluminiumverbindung um eine Organoaluminiumverbindung mit der Formel AlR₃ handelt, wobei R für einen Kohlenwasserstoffrest mit 1-10 Kohlenstoffatomen steht, und es sich bei der stickstoffhaltigen Verbindung um ein Cycloalkylamin mit der allgemeinen Formel R-NH₂ handelt, wobei R für einen Cycloalkylrest mit 3 bis 8 Kohlenstoffatomen steht,
wobei das Katalysatorsystem durch Umsetzung des Reduktionsmittels mit einem porösen Träger und dann durch Umsetzung mit einem Silylchromat hergestellt wird.

2. Verfahren nach Anspruch 1, **dadurch gekennzeichnet, dass** es sich bei dem porösen Träger um Siliciumdioxid handelt.

3. Verfahren nach einem der Ansprüche 1-2, **dadurch gekennzeichnet, dass** es sich bei dem Silylchromat um Bis(triphenylmethyl)chromat handelt.

4. Verfahren nach einem der Ansprüche 1-3, **dadurch gekennzeichnet, dass** es sich bei der Organoaluminiumverbindung mit der Formel AlR₃ um Trimethylaluminium, Triethylaluminium und/oder Triisobutylaluminium handelt.

5. Verfahren nach Anspruch 4, **dadurch gekennzeichnet, dass** es sich bei der Organoaluminiumverbindung mit der Formel AlR₃ um Triisobutylaluminium handelt.

6. Verfahren einem der Ansprüche 1-5, **dadurch gekennzeichnet, dass** die stickstoffhaltige Verbindung aus Cyclopropylamin, Cyclobutylamin, Cyclopentylamin, Cyclohexylamin, Cycloheptylamin und/oder Cyclooctylamin ausgewählt ist.

7. Verfahren nach Anspruch 6, **dadurch gekennzeichnet, dass** es sich bei der stickstoffhaltigen Verbindung um Cyclohexylamin und/oder Cyclooctylamin handelt.

8. Artikel, hergestellt unter Verwendung der mit dem Verfahren nach einem der Ansprüche 1-7 erhaltenen Produkte.

9. Blasformartikel, hergestellt unter Verwendung der mit dem Verfahren nach einem der Ansprüche 1-7 erhaltenen Produkte.

## Revendications

1. Procédé de fabrication de polyéthylène de haute densité ayant une densité de 945 à 965 kg/m³ par polymérisation d'éthylène en présence d'un catalyseur à base de chromate de silyle présent sur un support et d'un agent réducteur comprenant le mélange réactionnel d'un composé d'alkylaluminium et d'un composé contenant de l'azote, **caractérisé en ce que** le composé d'alkylaluminium est un composé d'organoaluminium ayant la formule AIR₃, dans laquelle R est un radical hydrocarboné contenant 1 à 10 atomes de carbone et le composé contenant de l'azote est une cycloalkylamine ayant la formule générale R-NH₂, dans laquelle R est un radical cycloalkyle comportant de 3 à 8 atomes de carbone,
dans lequel le système catalytique est préparé par la réaction de l'agent réducteur avec un support poreux et ensuite par une réaction avec un chromate de silyle.

2. Procédé selon la revendication 1, **caractérisé en ce que** le support poreux est la silice.

3. Procédé selon l'une quelconque des revendications 1 ou 2, **caractérisé en ce que** le chromate de silyle est le chromate de bis(triphénylsilyle).

4. Procédé selon l'une quelconque des revendications 1 à 3, **caractérisé en ce que** le composé d'organoaluminium ayant la formule AIR₃ est le triméthylaluminium, le triéthylaluminium et/ou le triisobutylaluminium.

5. Procédé selon la revendication 4, **caractérisé en ce que** le composé d'organoaluminium ayant la formule AIR₃ est le triisobutylaluminium.

6. Procédé selon l'une quelconque des revendications 1 à 5, **caractérisé en ce que** le composé contenant de l'azote est sélectionné parmi la cyclopropylamine, la cyclobutylamine, la cyclopentylamine, la cyclohexylamine, la cycloheptylamine et/ou la cyclooctylamine.

7. Procédé selon la revendication 6, **caractérisé en ce que** le composé contenant de l'azote est la cyclohexylamine et/ou la cyclooctylamine.

8. Article préparé en utilisant les produits obtenus avec le procédé selon l'une quelconque des revendications 1 à 7.

9. Article moulé par soufflage préparé en utilisant les produits obtenus avec le procédé selon l'une quelconque des revendications 1 à 7.
